# EUROPEAN PATENT APPLICATION

(11) **EP 3 543 101 A1**
(43) Date of publication of application: **25.09.2019**
(21) Application number: 18382187.5
(22) Date of filing: 21.03.2018
(51) Int. Cl.: B62J 27/00, B60R 22/00, A41D 13/00

(54) **OCCUPANT ANTI-LAUNCH SAFETY SYSTEM FOR VEHICLES LACKING ANY TYPE OF PASSIVE RESTRAINT MEANS**

(71) Applicant: Basamento de Alquileres, S.L., 50006 Zaragoza (ES)
(72) Inventor: CIORDIA SANCHEZ, Pablo Gregorio Severo, 50006 ZARAGOZA (ES); LAPUERTA CAPAPEY, Juan Antonio, 50006 ZARAGOZA (ES)
(74) Representative: Ungria López, Javier

(57) **Abstract**

The invention relates to an occupant anti-launch safety system for vehicles lacking any type of passive restraint means, based on a vest harness 1, provided with a carabiner link 2 on the back upper part thereof, where the upper end 7 of the belt 3 is attached, relative to the fixed part of a safety belt, and which, on the other end thereof, ends at a female buckle connector 20, to buckle the male tab connector 4, at which the retractable part of said belt ends, protruding through an opening, made on the vehicle seat 6, contained in a sealed casing 14, fastened to a metal piece 8 in which first perforations 9 have been made, the assembly being screwed to the vehicle frame 15 through second coinciding perforations 16. The invention aims to prevent vehicle occupants from being launched into the air in a crash and/or fall.

## Description

### OBJECT OF THE INVENTION

The present invention relates to an occupant anti-launch safety system for vehicles lacking any type of passive restraint means, which is based on a traditional vest harness, placed on the torso of occupants, to which a traditional car safety belt is attached. Furthermore, this system can be adapted to clothing items, which will incorporate an inner vest harness-type structure among the folds thereof, providing the same effect as the previously mentioned outer vest harness.

As expressed by the title, the invention aims to prevent occupants of vehicles such as mopeds, motorcycles, motorized tricycles, quads, etc. from being launched into the air in a crash, abrupt stop, impact, or fall; and, this way, it prevents the first impact of the occupant, which is generally the impact that causes the most serious injuries, without hindering the movement and riding ability of the occupants.

### BACKGROUND OF THE INVENTION

Current safety and protection systems for occupants of vehicles that do not have any type of restraint means are largely means that are used to reduce the impact of the occupant after they have been launched into the air, which consist of clothing items or systems incorporated into the clothing items, and which aim to provide a function similar to that of an airbag, inflating in the moment of propulsion and impact of the vehicle. A few examples are: the "self-inflating safety vest for motorcyclists" (U9401233), the "self-inflating safety device to be incorporated into motorcycle clothing" (U9801838), the "body protection device applicable to motorcyclists" (U9701375), or the "inflatable helmet" (U201530859). However, these types of inventions do not solve the problem of flying off of the vehicle and crashing against the elements along the trajectory.

There are other inventions dedicated to improving the stability of passengers of these types of vehicles, consisting of belts or clothing items, to which a grip has been incorporated so that the driver can place it on themselves and the passenger can attaches themselves to the driver. A few examples are: the classic "safety vest for motorcycle users" (U0101708), the "safety belt for motorcycle passengers and similar" (U200102867), the "grip for motorcycle passengers" (U200500637). Understandably, this type of invention provides stability for the occupants of the vehicle while in motion, yet it does not prevent the occupants from being launched into the air in a collision or abrupt stop.

In the state of the art, we can find few examples of inventions that involve the passive fastening of the occupant to the vehicle. Among these examples, the most noteworthy are those provided on motorcycles with a roof. Of these inventions, there is the "passive safety device for vehicles" (JP2001058924), which consists of a pneumatic type three-point safety belt, incorporating an inflator.

Likewise, in the state of the art there is a "safety device for occupants of two or three-wheeled vehicles" (U9300714), consisting of a rigid safety belt that goes around the user's neck and passes over the front and side area of the torso, resting against the occupant's chest, with two anchoring points directly on the motorcycle. By being fixed and rigid, this invention makes driving and mobility difficult for the occupant. Moreover, in the case of an impact, all of the pressure would be exerted on the neck and cervical vertebrae, possibly producing an extremely harmful effect to the torso of the occupant.

Thus, for occupants of these types of vehicles, the safety systems described are insufficient for guaranteeing the safety and integrity of said occupants in a crash or abrupt stop, and thus, as the present invention proposes, it is possible to prevent the occupant from flying off of the vehicle at the first instant in an easy, practical and affordable way, since they are retained by the action of a retractable safety belt and have complete maneuverability in normal riding, and furthermore, the connection and disconnection of the system is as easy as that of a car. Given the simplicity, light weight and reduced volume of the vest harness and the fixed part of the traditional female buckle car safety belt, it is possible to easily store the vest harness in the same place as the helmet, once the vehicle is parked.

The anti-launch safety systems for vehicles wherein the occupant currently has no type of passive restraint means, which the invention proposes, along with the obligatory helmet, seeks to prevent this first impact, which is the most harmful, and be able to reduce the injuries of the occupants of these vehicles by allowing the occupant to maintain their balance and preventing them from being launched, by the effect exerted by the retractable, traditional, car safety belt on the upper part of the user's back, and secured to the frames of these vehicles.

### DESCRIPTION OF THE INVENTION

The invention described below relates to a safety system for occupants of vehicles that do not have any type of passive restraint means, which seeks to reduce the serious accidents that occur by preventing the occupant from flying off into the air generally due to a crash or abrupt stop. To do so, the invention aims to contain the occupant in a permanent and passive way to the vehicle, by means of a vest harness which, through a fastening system, connects to a traditional car safety belt, without altering the freedom of movement and riding ability of the occupant, said safety system being actuated only when an abrupt movement is produced, as is the case with car safety belts; being able to be detached and stored when not in use.

To such end, the invention comprises two traditional elements that have been previously mentioned: a traditional car safety belt and a traditional vest harness, adapting them to the very design and needs of these types of vehicles, integrating them for a simple, practical, quick and safe use. This way, a perforated metal piece allows the retractable part of a traditional car safety belt to be assembled to the vehicle frame, the seat of which has been provided with a grommet-like opening, which allows for the male tab connector, at which the retractable part of the traditional car safety belt ends, to protrude out of the same. The casing that contains the retractable part of the safety belt is sealed to protect the mechanism of said retractable traditional car safety belt from the natural elements, just as the invention contemplates protection thereof with a grommet in the vehicle seat, in which the male tab of said belt fits, the opening remaining closed when not in use.

Likewise, the traditional vest harness, generally made of nylon, is placed over the torso of occupants when they get on the vehicle, just as helmets are placed on their heads. In essence, the traditional vest harness has a carabiner link piece on the back upper part of said structure, to which the fixed part of the traditional car safety belt is attached at the end of the belt with the female buckle connector.

To this end, the upper end of the belt, making up the fixed part of the safety belt, can be marketed with two fastening means, one with a knot-type (loop) fastener on the same belt, and another in a perforated metal piece, such that once fastened to the vest harness, the aforementioned belt of the fixed part of the traditional car safety belt, which on the other end thereof ends at a female buckle connector, can be fastened, as in a car, to the other part of the traditional car safety belt, by means of a male-tab connection to which the retractable part of the aforementioned traditional car safety belt buckles, screwed to the vehicle frame and which protrudes to the outside through a grommet-like opening made in the seat and which in turn forms a stop.

As was previously mentioned, this system can be adapted to motorcycle clothing items, which have an internal vest harness type structure among the folds thereof, such that when fastened, it produces the same effect as the previously mentioned outer vest harness; having on the back upper part thereof an opening, covered by a flap, in which to place the carabiner link when it is desirable to have integral connection with the anti-launch safety system.

The occupant anti-launch safety system for vehicles lacking any type of passive restraint means can be incorporated and adapted to the structures of these vehicles in the manufacturing process, so that the manufacturer can incorporate them as a standard or adapt them to previously manufactured models.

To complete the description provided below, and for the purpose of helping to make the characteristics of the invention more readily understandable, the present specification is accompanied by a set of figures which by way of illustration and not limitation represent the most characteristic details of the invention.

### BRIEF DESCRIPTION OF THE DRAWINGS

Figure 1. shows a side elevation view of the invention completely mounted on the vehicle occupant.
Figure 2. shows a perspective view of the grommet-like opening in the vehicle seat to house the male tab of the retractable part of the traditional car safety belt.
Figure 3. shows a front elevation view of the female buckle and the male tab pieces of traditional car safety belts assembled.
Figure 4. shows a front elevation view of two of the terminations of the upper ends of the female buckle connector, of the fixed part of the belt of the traditional care safety belt which is attached to the carabiner link of the harness vest.
Figure 5. shows a plan view of the carabiner link that joins the vest harness to the belt of the female buckle connector of the fixed part of the traditional car safety belt.

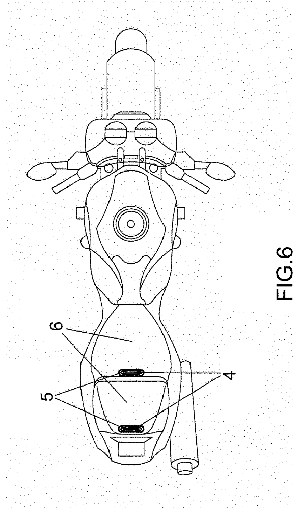

Figure 6. shows a plan view of the vehicle with the grommet-like opening made in the vehicle seats, which house the male tab of the retractable part of the traditional car safety belt.

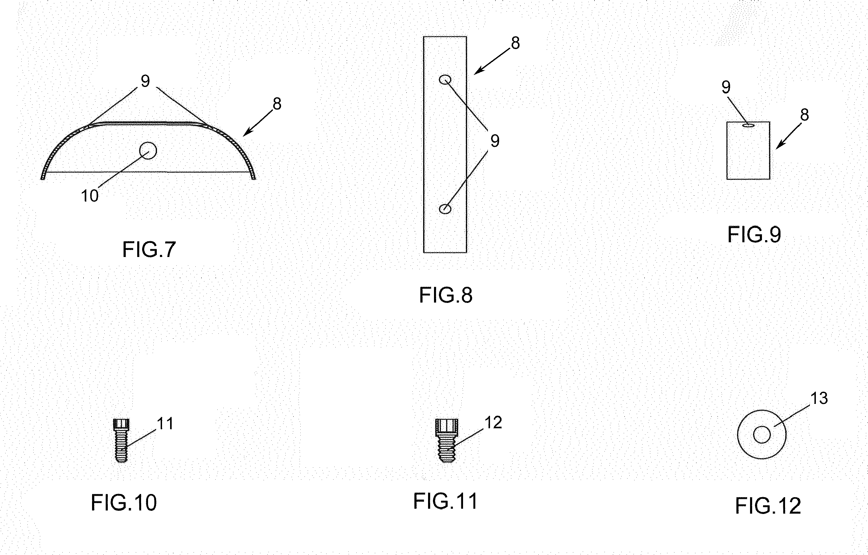

Figure 7. shows a front elevation view of the metal piece defined by a plate, with curved ends thereof, closed by one of the sides thereof provided with first perforations, which joins the retractable part of the traditional car safety belt to the vehicle frame.
Figure 8. shows a plan view of figure 7, in which the first perforations made in the same can be seen.
Figure 9. shows a side elevation view of figure 7.
Figure 10. shows a front elevation view of the side screw that joins the perforated metal piece to the vehicle frame.
Figure 11. shows a front elevation view of the central screw that joins the sealed casing for the retractable part of the traditional car safety belt to the perforated metal piece.
Figure 12. shows a plan view of the washer that completes the connection of the central screw that joins the sealed casing for the retractable part of the traditional car safety belt to the perforated metal piece.

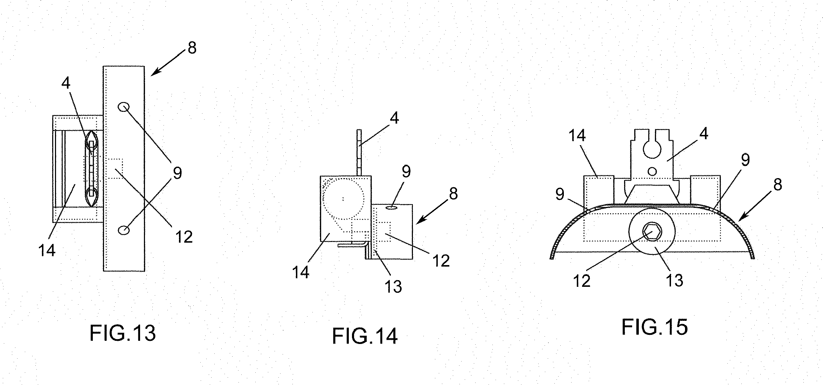

Figure 13. shows a plan view of the perforated metal piece, joined to the sealed casing for the retractable part of the traditional car safety belt.
Figure 14. shows a side elevation view of figure 13.
Figure 15. shows a front elevation view of figure 13.
Figure 16. shows a plan view of a traditional vehicle frame with second perforations in the central joining bridges, wherein the perforated metal piece is anchored.
Figure 17. shows a plan view of figure 16, with the sealed casing of the retractable part for a pair of traditional car safety belts for the driver and the passenger, anchored to the frame through the perforated metal piece with side screws.

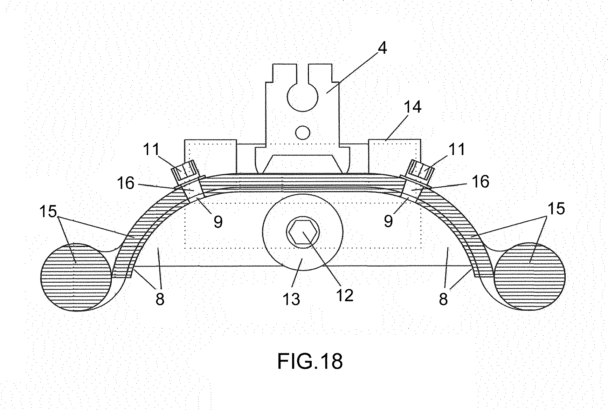

Figure 18. shows a detailed cross-sectional front elevation view of figure 17, with respect to the perforated metal piece.
Figure 19. shows a detailed cross-sectional side elevation view of figure 17, with the vehicle seat mounted.
Figure 20. shows a front elevation view of a traditional vest harness.
Figure 21. shows a rear elevation view of figure 20, in which one can see the carabiner link that joins the vest harness to the belt of the female buckle connector of the fixed part of the traditional car safety belt, completely mounted.
Figure 22. shows a left side elevation view of figure 21, showing another type of vest harness that is marketed, for attaching the female buckle belt of the fixed part of the traditional car safety belt, completely mounted.
Figure 23. shows a front elevation view of a traditional clothing item for motorcyclists, into which a vest harness type structure has been incorporated within the layers thereof during manufacturing.
Figure 24. shows a rear elevation view of figure 23, in which one can see, on the upper part thereof, the opening of a flap to be able to incorporate the carabiner link when needed.
Figure 25. shows a view of figure 24, in which one can see the carabiner link that joins the traditional clothing item for motorcycle use, with the belt of the female buckle connector of the fixed part of the traditional car safety belt attached and completely mounted.

### DESCRIPTION OF A PREFERRED EMBODIMENT

In light of the aforementioned figures and in accordance with the numbering used, we can see a preferred embodiment of the occupant anti-launch safety system for vehicles lacking any type of passive restraint means, in which a vehicle is shown to which a pair of said safety systems have been housed which would correspond to one for the driver and the other for the passenger.

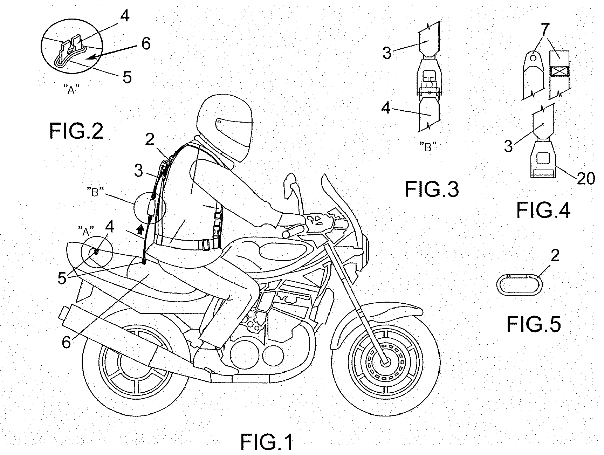

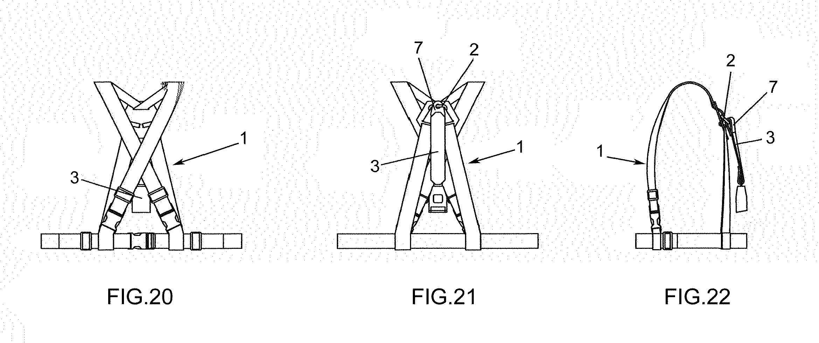

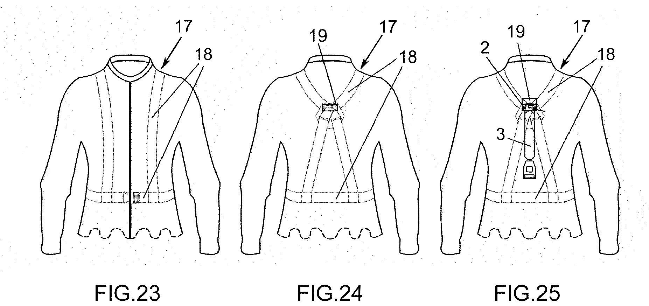

The invention is essentially based on an outer vest harness 1 (see figures 20-22) and/or a traditional motorcycle clothing item 17 with an inner vest harness structure 18 (figures 23-25) placed on the torso of the occupants (figure 1), which have, on the back upper part of said structures, a carabiner link-type piece 2, to which the belt 3 is attached through the upper end 7, relative to the fixed part of the safety belt and which on the other end, ends at a female buckle 20 connector (see figures 21 and 22).

The invention contemplates two design variations for said end 7 of the belt relative to the fixed part of the safety belt and which on the other end, ends at the female-buckle connector 3, which can be looped or perforated metal, to be able to place and remove for comfort and practicality for the occupant when not in use (figure 4).

Such that once the aforementioned belt 3, which constitutes the fixed part of the safety belt, is fastened to the aforementioned vest harness 1, at the end 7, it can be buckled to the other end of the belt 3, ending at the female-buckle 20, the other retractable part of the traditional car safety belt, by means of a male-tab connector 4 (figure 3) at which the retractable part of the aforementioned traditional car safety belt ends, and which exits through the grommet-like opening 5, made in the seat 6 of the vehicle for the passage and housing of said male-tab 4 connector (figure 2).

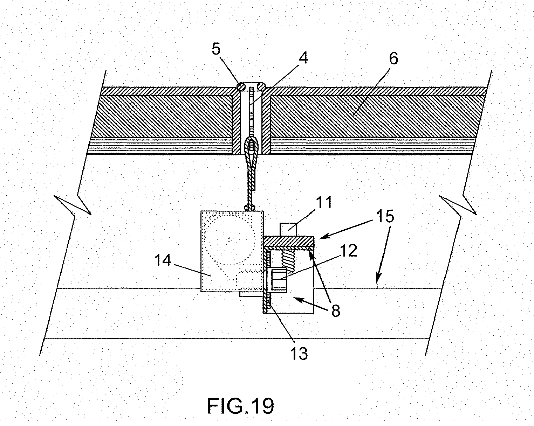

Thus in the aforementioned grommet-like opening 5, the male tab connector 4 is perfectly fitted, at which the retractable part of the safety belt ends, so that the occupant can pull the same to buckle him or herself, just as in a car, with the female buckle connector 3, completing the system, to act in the defense of the occupants of the vehicles, in the case of an abrupt pull, the retention of the traditional safety belt system performing as in a car, and being placed in the sealed casing 14 (figure 19), making natural maneuvers and movements possible for the occupant while in motion, and easily and quickly unbuckling the belt, pressing the mechanism that forms part of the female buckle connector 3 to get off the vehicle.

The retractable part of the aforementioned traditional car safety belt is contained in a sealed casing 14 that is screwed to the metal piece 8, made up of a plate with the curved ends thereof closed by one of the sides thereof, the plate having a first pair of side perforations 15.

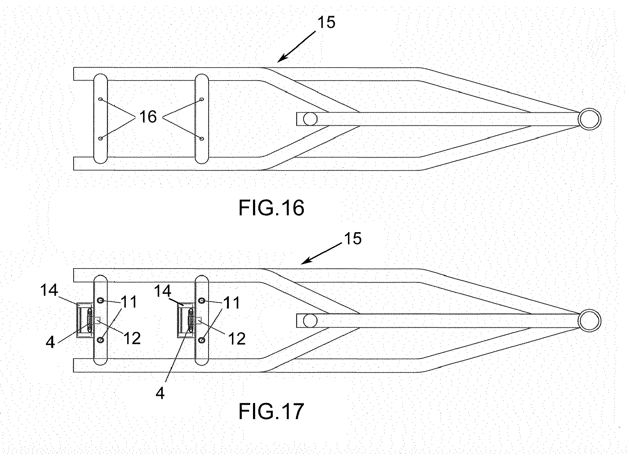

The screwed joint of the sealed casing 14 to the plate 8 is done by means of a central screw 12 and washer 13 through the central perforation 10, of the closed side face thereof, the assembly being anchored to the vehicle frame 15 by means of second perforations 16 made on the frame of the same and which will be coinciding with the first perforations 9 made on the curve-ended plate that makes up the perforated metal piece 8, remaining fixed by side screws 11, to place it in currently existing and/or manufactured vehicles (figure 17) and/or providing said invention to newly manufactured vehicles in the most appropriate place, according to each model and manufacturer.

The system that adapts to motorcycle clothing items 17, such as traditional jackets, one-piece motorcycle suits, etc. will have an internal vest harness type structure 18 among the inner layers thereof (figures 23, 24 and 25) such that by being fastened, it provides the same effect as the previously mentioned outer vest harness 1, having, an opening, on the back upper part thereof, with a flap 19 to place the carabiner link 2 when it is desirable to have the integral connection with the anti-launch safety system (figure 25), and to cover the connection of the opening with a flap 19, when the belt is detached from the carabiner link 2.

## Claims

1. An occupant anti-launch safety system for vehicles lacking any type of passive restraint means, **characterized in that** it comprises a vest harness (1), either external or internal (18), worn by the occupant, which comprises a carabiner link (2), to which the fixed part (3) of a safety belt is hooked at one of the ends thereof, by fastening means, either looped or being a metal perforation (7), the fixed part of the safety belt (3) thereof, at the other end, ending at a female buckle connector (20), the female buckle connector (20) fastening to a male-tab connector (4) at which the free end of the retractable part of the safety belt ends, and the male tab (4) connector of which is housed in a grommet-like opening (5), made on the vehicle seat (6), allowing said retractable part of the safety belt to be actuated, contained in a sealed casing (14), the sealed casing (14) being screwed to a perforated metal piece (8), made up of a plate of curved ends closed on one of the sides thereof, though a central perforation (10) of the closed side, by means of a central screw (12) and a washer (13), the assembly of which is screwed to the vehicle, from said perforated metal piece (8), being provided with first perforations (9) to be permanently screwed, with two side screws (11), through second perforations (16) of the vehicle frame (15).

2. The occupant anti-launch safety system for vehicles lacking any type of passive restraint means, according to the first claim, **characterized in that** the inner vest harness (18) is housed in the inner layers of a motorcycle clothing item (17) as an integral part of the structure thereof, provided with an opening comprising a flap (19) on the back upper part, to which opening the carabiner link (2) is able to be incorporated.
